# EUROPÄISCHE PATENTANMELDUNG

(11) **EP 3 438 444 A1**
(43) Veröffentlichungstag der Anmeldung: **06.02.2019**
(21) Anmeldenummer: 18179444.7
(22) Anmeldetag: 25.06.2018
(51) Int. Cl.: F02M 55/02, F02M 25/025, F02M 69/46

(54) **VERTEILERVORRICHTUNG FÜR EINE WASSEREINSPRITZVORRICHTUNG EINER BRENNKRAFTMASCHINE**

(30) Priorität: 02.08.2017 DE 102017213387
(71) Anmelder: Robert Bosch GmbH, 70469 Stuttgart (DE)
(72) Erfinder: Stier, Hubert, 71665 Vaihingen/Enz (DE)

(57) **Zusammenfassung**

Für eine Verteilervorrichtung (1) für eine Wassereinspritzvorrichtung (100) einer Brennkraftmaschine, mit einem sich entlang einer Längsachse (3) erstreckenden Verteilerkörper (2) mit einem ersten Ende (4) und einem zweiten Ende (5), wobei in dem Verteilerkörper (2) ein Innenraum (6) ausgebildet ist, wobei an dem Verteilerkörper (2) mehrere Ausgänge (11,12,13,14) ausgebildet sind, die zur Befestigung von Einspritzventilen (21,22,23,24) vorgesehen sind, wobei an dem Verteilerkörper (2) wenigstens ein als Anschluss (31) ausgebildeter Eingang (41) ausgebildet ist, an den wenigstens eine Versorgungsleitung anschließbar ist, wird vorgeschlagen, dass in dem Verteilerkörper (2) wenigstens eine Öffnung (7) ausgebildet ist, die den Innenraum (6) des Verteilerkörpers (2) mit einem Außenbereich (10) des Verteilerkörpers (2) verbindet, wobei die Öffnung (7) durch wenigstens ein elastisches Dämpfelement (70) verschlossen ist.

## Beschreibung

### Stand der Technik

Die Erfindung betrifft eine Verteilervorrichtung für eine Wassereinspritzvorrichtung einer Brennkraftmaschine mit den Merkmalen des Oberbegriffs des unabhängigen Anspruchs 1.

Es ist bekannt, dass bei Einspritzvorrichtungen von Brennkraftmaschinen die Einspritzventile, durch die der Kraftstoff beispielsweise in ein Saugrohr oder einen Brennraum der Brennkraftmaschine eingespritzt wird, über eine Verteilervorrichtung mit Kraftstoff versorgt werden. Eine derartige Verteilervorrichtung wird beispielsweise auch Fuelrail genannt. Die Verteilervorrichtung weist im Inneren einen Kraftstoffspeicher auf, durch den der Kraftstoff über Ausgänge der Verteilervorrichtung in die einzelnen Einspritzventile strömt. Die Einspritzventile sind dabei beispielsweise in an den Ausgängen ausgebildeten Injektortassen eingesetzt. Der Kraftstoff wird der Verteilervorrichtung über einen hydraulischen Anschluss zugeführt. Die Verteilervorrichtung dient dem Verteilen von Kraftstoff an die Einspritzventile. Zusätzlich bildet die Verteilervorrichtung einen Kraftstoffspeicher, so dass den Einspritzventilen jederzeit genügend Kraftstoff zur Verfügung steht. Darüber hinaus werden durch die Elastizität des Kraftstoffes in der Verteilervorrichtung Druckpulsationen gedämpft, wodurch die Zumessgenauigkeit der Einspritzventile verbessert wird. Eine Verteilervorrichtung für Kraftstoffe ist beispielsweise in der DE 41 11 988 A1 gezeigt.

Neben Kraftstoffen können auch andere Medien durch eine Einspritzvorrichtung eingespritzt werden. Beispielsweise kann Wasser in ein Saugrohr oder eine Brennkammer der Brennkraftmaschine eingespritzt werden um die Temperatur bei einem Verbrennungsvorgang der Brennkraftmaschine eines Kraftfahrzeugs zu senken und um somit einen Kraftstoffverbrauch der Brennkraftmaschine zu reduzieren und ein Emissionsverhalten der Brennkraftmaschine zu verbessern.

Bei Wassereinspritzsystemen für Brennkraftmaschinen ist normalerweise ein Wassertank vorgesehen, so dass jederzeit Wasser zur Einspritzung in das Saugrohr oder die Brennkammer der Brennkraftmaschine verfügbar ist. Zusätzlich kann bei derartigen Wassereinspritzsystemen Wasser mit Hilfe einer Wassergewinnungsanlage beispielsweise aus dem Abgassystem der Brennkraftmaschine in dem Kraftfahrzeug oder aus der Umgebung des Kraftfahrzeugs gewonnen werden und beispielsweise auch dem Wassertank zugeführt werden. Von dem Wassertank kann Wasser beispielsweise mittels einer Pumpe über eine Verteilervorrichtung zu Einspritzventilen, durch die das Wasser dann beispielsweise in ein Saugrohr oder eine Brennkammer der Brennkraftmaschine eingespritzt wird, befördert werden. Dazu kann, wie bei Einspritzsystemen für Brennstoff, die Verteilervorrichtung dazu vorgesehen sein Wasser zu speichern und auf mehrere Einspritzventile, durch die das Wasser dann eingespritzt werden kann, zu verteilen.

Eine Besonderheit von Wassereinspritzvorrichtungen für Wasser gegenüber Einspritzvorrichtungen von Brennstoffen ist, dass die Einspritzventile bei der Wassereinspritzung nach Abstellen des Motors geleert werden um möglichen Schäden der Einspritzventile durch in den Einspritzventilen gefrierendes Wasser vorzubeugen. Dies kann beispielsweise durch die Pumpe geschehen, die das Wasser aus den Einspritzventilen zurücksaugt.

### Offenbarung der Erfindung

Erfindungsgemäß wird eine Verteilervorrichtung für eine Wassereinspritzvorrichtung einer Brennkraftmaschine mit einem sich entlang einer Längsachse erstreckenden Verteilerkörper mit einem ersten Ende und einem zweiten Ende vorgeschlagen. In dem Verteilerkörper ist ein Innenraum ausgebildet, wobei an dem Verteilerkörper mehrere Ausgänge ausgebildet sind, die zur Befestigung von Einspritzventilen vorgesehen sind. Dabei ist an dem Verteilerkörper wenigstens ein als Anschluss ausgebildeter Eingang ausgebildet, an den wenigstens eine Versorgungsleitung anschließbar ist. Erfindungsgemäß ist in dem Verteilerkörper wenigstens eine Öffnung ausgebildet, die den Innenraum des Verteilerkörpers mit einem Außenbereich des Verteilerkörpers verbindet, wobei die Öffnung durch wenigstens ein elastisches Dämpfelement verschlossen ist.

### Vorteile der Erfindung

Gegenüber dem Stand der Technik weist die Verteilervorrichtung mit den Merkmalen des unabhängigen Anspruchs 1 den Vorteil auf, dass durch das elastische Dämpfelement die Druckpulsationen des Wassers in der Verteilervorrichtung und im gesamten Einspritzsystem vorteilhaft aufgenommen und gedämpft werden können. Das Volumen der erfindungsgemäßen Verteilervorrichtung kann somit, im Vergleich zum Volumen einer Verteilervorrichung für Kraftstoffe, vorteilhaft verkleinert werden. So wird ein geringeres Volumen an Wasser in der Verteilervorrichtung gespeichert. Somit kann der Innenraum der Verteilervorrichtung ein vorteilhaft kleines Volumen aufweisen, da durch das elastisches Dämpfelement kein großes Volumen des Wassers zur Dämpfung der Druckpulsationen in der Verteilervorrichtung notwendig ist. Dies hat den Vorteil, dass die Leitungen und die Verteilervorrichtung beim Abstellen des Fahrzeugs vorteilhaft schnell und gut leer gesaugt werden können. Somit können Beschädigungen durch in der Verteilervorrichtung zurückbleibendes und sich beim Gefrieren ausdehnendes Wasser vorteilhaft vermieden werden. Weiterhin kann durch das elastische Dämpfelement die Zumessgenauigkeit des Wassereinspritzsystems vorteilhaft verbessert werden, da die Druckpulsationen des Wassers in der Verteilervorrichtung vorteilhaft gedämpft werden und somit den Einspritzventilen Wasser mit vorteilhaft konstantem Druck zur Verfügung steht.

Weitere vorteilhafte Ausgestaltungen und Weiterbildungen der Erfindungen werden durch die in den Unteransprüchen angegebenen Merkmale ermöglicht.

Gemäß eines vorteilhaften Ausführungsbeispiels ist es vorgesehen, dass das elastische Dämpfelement wenigstens teilweise aus einem Elastomer besteht. Das Dämpfelement stellt ein vorteilhaft kostengünstiges Element zur Dämpfung der Druckpulsationen dar, das Druckpulsationen durch elastische Verformungen des Dämpfelements vorteilhaft einfach und gut dämpfen kann.

Gemäß eines vorteilhaften Ausführungsbeispiels ist es vorgesehen, dass das elastische Dämpfelement wenigstens einen elastischen Membranbereich umfasst, der sich in Richtung des Außenbereiches des Verteilerkörpers und in Richtung des Innenraums des Verteilerkörpers bewegen kann. Durch den elastischen Membranbereich können die Druckpulsationen des Wassers in dem Innenraum der Verteilervorrichtung vorteilhaft gut gedämpft werden. Der Membranbereich kann vorteilhaft gut und einfach an verschiedene Anforderungen, beispielsweise an verschiedene Anforderungen an den zu dämpfenden Druck oder unterschiedliches Volumen des Innenraums der Verteilervorrichtung, angepasst werden. Die Anpassung kann beispielsweise über eine Änderung eine Dicke der Membran und/oder einer Flächenausdehnung, also beispielsweise eines Durchmessers der Membran erfolgen. Durch die Größe der Öffnung kann beispielsweise auch besonders einfach die Stärke der Druckdämpfung durch den Membranbereich angepasst werden.

Gemäß eines vorteilhaften Ausführungsbeispiels ist es vorgesehen, dass an dem Verteilerkörper ein die Öffnung umlaufender Haltebereich zur Befestigung des elastischen Dämpfelements ausgebildet ist An dem Haltebereich kann das elastische Dämpfelement vorteilhaft gut und einfach befestigt werden. Der Haltebereich kann dabei beispielsweise als Aufnahme und/oder Halterung des elastischen Dämpfelements dienen.

Gemäß eines vorteilhaften Ausführungsbeispiels ist es vorgesehen, dass der Haltebereich an einer von dem Innenraum des Verteilerkörpers abgewandten Außenseite des Verteilerkörpers ausgebildet ist und von der Außenseite des Verteilerkörpers abragt. Ein derart ausgebildeter Haltebereich kann als vorteilhaft gute Halterung für das elastische Dämpfelement dienen. Das elastische Dämpfelement kann beispielsweise an der Außenseite des Verteilerkörpers befestigt werden. Das elastische Dämpfelement kann vorteilhaft beispielsweise auf den Haltebereich aufgesetzt und/oder aufgesteckt werden. Der Haltebereich kann so beispielsweise Auflageflächen und/oder Befestigungsflächen für das elastische Dämpfelement aufweisen, an denen das elastische Dämpfelement aufliegt und/oder befestigt ist und somit die Öffnung in dem Verteilerkörper abgedichtet verschließen kann.

Gemäß eines vorteilhaften Ausführungsbeispiels ist es vorgesehen, dass die Öffnung an einer Stirnseite des Verteilerkörpers an einem Ende des Verteilerkörpers ausgebildet ist, wobei ein Ende des Verteilerkörpers den Haltebereich bildet. Bei einem derart ausgebildeten Ventilkörper kann das elastische Dämpfelement vorteilhaft gut und einfach an dem Ende des Verteilerkörpers befestigt werden. Beispielsweise kann bei einem rohrförmigen Verteilerkörper das Ende des Verteilerkörpers offen sein, so dass an dem Ende die Öffnung gebildet ist. Das Dämpfelement kann somit vorteilhaft beispielsweise an dem rohrförmigen Verteilerkörper befestigt werden.

Gemäß eines vorteilhaften Ausführungsbeispiels ist es vorgesehen, dass an dem elastischen Dämpfelement ein Randbereich ausgebildet ist, der einen Außenmantel des Haltebereichs vollständig umlaufend umgibt, insbesondere an dem Außenmantel des Haltebereichs vollständig umlaufend anliegt. So kann durch die Anlage des Randbereich des elastischen Dämpfelements an dem Außenmantel des Haltebereichs eine vorteilhaft gute und einfache luftundurchlässige und flüssigkeitsundurchlässige Abdichtung zwischen dem Verteilerkörper und dem elastischen Dämpfelement gebildet sein. Die Öffnung ist somit durch das elastische Dämpfelement durch die Abdichtung durch den Randbereich und den Außenmantel vorteilhaft gut luftundurchlässig und feuchtigkeitsundurchlässig verschlossen.

Gemäß eines vorteilhaften Ausführungsbeispiels ist es vorgesehen, dass der Haltebereich einstückig mit Verteilerkörper ausgebildet ist. Ein derart ausgebildeter Verteilerkörper kann vorteilhaft einfach und kostengünstig hergestellt werden und der Haltebereich ist vorteilhaft gut und sicher mit dem Verteilerkörper verbunden.

Gemäß eines vorteilhaften Ausführungsbeispiels ist es vorgesehen, dass das elastische Dämpfelement kappenförmig ausgebildet ist, wobei das Dämpfelement den Haltebereich kappenartig umschließt und dergestalt die Öffnung verschließt. Ein derart ausgeführtes elastisches Dämpfelement kann vorteilhaft auf den Haltebereich aufgesetzt werden. Das elastische Dämpfungselement kann den Haltebereich beispielsweise derart umschließen, dass es durch die Elastizität des elastischen Dämpfelements an den Haltebereich gedrückt wird und somit an diesem befestigt ist.

Gemäß eines vorteilhaften Ausführungsbeispiels ist es vorgesehen, dass das elastische Dämpfelement einstückig ausgebildet ist. Ein derart ausgebildetes elastisches Dämpfelement kann vorteilhaft einfach und kostengünstig gefertigt werden und vorteilhaft einfach montiert werden.

### Kurze Beschreibung der Zeichnungen

Ausführungsbeispiele der Erfindung sind in der Zeichnung dargestellt und werden in der nachfolgenden Beschreibung näher erläutert. Es zeigen
Fig. 1 eine schematische Darstellung eines Wassereinspritzsystems mit einer Verteilervorrichtung,
Fig. 2 eine schematische Darstellung eines ersten Ausführungsbeispiels der erfindungsgemäßen Verteilervorrichtung,
Fig. 3 eine schematische Darstellung eines zweiten Ausführungsbeispiels der erfindungsgemäßen Verteilervorrichtung.

### Ausführungsformen der Erfindung

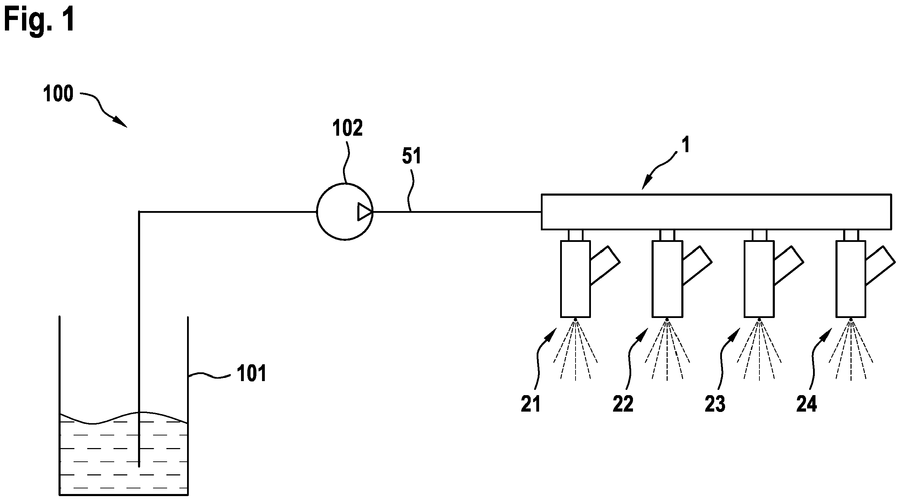

Die Erfindung wird exemplarisch anhand eines in Fig. 1 schematisch dargestellten Wassereinspritzsystems mit einer Wassereinspritzvorrichtung 100 zum Einspritzen von Wasser in eine Brennkraftmaschine beschrieben. Dabei wird Wasser über eine Verteilervorrichtung 1 auf Einspritzventile 21, 22, 23, 24 verteilt.

Fig. 1 zeigt einen Wassertank 101, in dem Wasser gespeichert ist, das mithilfe einer Pumpe 102 über eine Versorgungsleitung 51 der Verteilervorrichtung 1 zuführbar ist. An der Verteilervorrichtung 1 sind Einspritzventile 21, 22, 23, 24 vorgesehen, durch die das Wasser beispielsweise in ein Saugrohr der Brennkraftmaschine oder auch direkt in einen Brennraum der Brennkraftmaschine eingespritzt werden kann. Dabei wird der Verteilervorrichtung 1 über die Versorgungsleitung 51 Wasser zugeführt. Das Wasser wird durch die Verteilervorrichtung 1 auf die Einspritzventile 21, 22, 23, 24 verteilt.

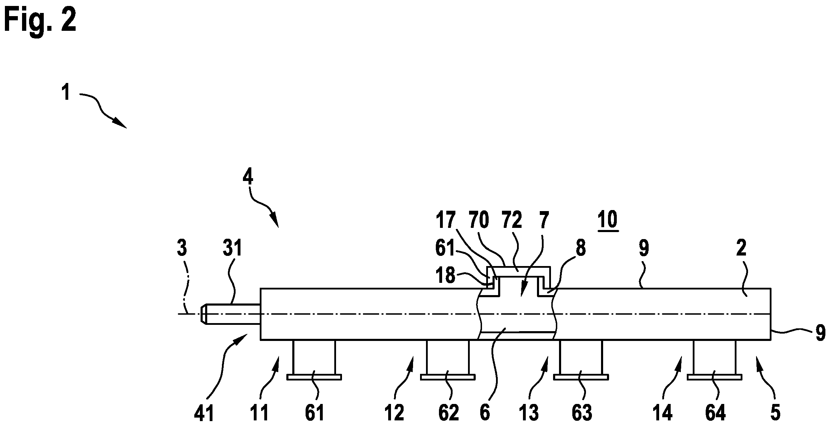

Fig. 2 zeigt ein erstes Ausführungsbeispiel der erfindungsgemäßen Verteilervorrichtung 1. Die Verteilervorrichtung 1 umfasst einen sich entlang einer Längsachse 3 erstreckenden Verteilerkörper 2 mit einem ersten Ende 4 und einem zweiten Ende 5. Die Längsachse 3 des Verteilerkörpers 2 ist dabei eine Achse, die in die gleiche Richtung verläuft in der sich der Verteilerkörper 2, der insbesondere rohrförmig ausgebildet sein kann, in die Länge erstreckt. Die Längsachse 3 verläuft beispielsweise durch das erste Ende 4 und durch das zweite Ende 5 des Verteilerkörpers 2. Das erste Ende 4 des Verteilerkörpers 2 und das zweite Ende 5 des Verteilerkörpers 2 bilden somit Enden 4, 5 bezüglich der Längserstreckung des Verteilerkörpers 2. Der Verteilerkörper 2 kann beispielsweise zumindest teilweise aus Stahl und/oder Thermoplast gefertigt sein. Der Verteilerkörper 2 ist in diesem Ausführungsbeispiel beispielsweise rohrförmig ausgebildet. Im Wesentlichen hat der Verteilerkörper 2 dabei die Form eines hohlen Zylinders. Eine Seitenwand 8 des Verteilerkörpers 2 bildet dabei einen Mantel des Zylinders und eine erste Stirnseite 19 eine zweite Stirnseite 20 bilden die Grundflächen des Zylinders. In dem Verteilerkörper 2 ist ein Innenraum 6 ausgebildet. In dem Innenraum 6 kann Wasser gespeichert werden bevor es in die Brennkraftmaschine eingespritzt wird. Der Innenraum 6 kann beispielsweise entsprechend der Form des Verteilerkörpers 2 ausgebildet sein. Der Innenraum 6 kann also beispielsweise bei einem rohrförmig ausgebildeten Verteilerkörper 2 auch rohrförmig sein. In diesem Ausführungsbeispiel begrenzen die Seitenwand 8 und die Stirnseiten 19, 20 den Innenraum 6 des Verteilerkörpers 2.

An dem Verteilerkörper 2 sind mehrere Ausgänge 11, 12, 13, 14 ausgebildet. Die Ausgänge 11, 12, 13, 14 sind zur Befestigung von Einspritzventilen 21, 22, 23, 24 vorgesehen. Die Ausgänge 11, 12, 13, 14 führen von dem Innenraum 6 des Verteilerkörpers 2 zu einem Außenbereich 10 des Verteilerkörpers 2. Sind Einspritzventile 21, 22, 23, 24 an den Ausgängen 11, 12, 13, 14 befestigt, so kann Wasser aus dem Innenraum 6 durch die Ausgänge 11, 12, 13, 14 in die Einspritzventile 21, 22, 23, 24 fließen und von diesen in die Brennkraftmaschine eingespritzt werden. Die Ausgänge 11, 12, 13, 14 sind beispielsweise als Injektortassen 61, 62, 63, 64 ausgebildet, in die die Einspritzventile 21, 22, 23, 24 einsetzbar sind. In diesem Ausführungsbeispiel sind die Ausgänge 11, 12, 13, 14 bezüglich der Längsachse 3 des Verteilerkörpers 2 in die gleiche Richtung gerichtet. Die Ausgänge 11, 12, 13, 14 sind in diesem Ausführungsbeispiel entlang der Längsachse 3 des Verteilerkörpers 2 an dem Verteilerkörper 2 aufgereiht.

In den in dieser Anmeldung dargestellten Ausführungsbeispielen ist beispielhaft eine Verteilervorrichtung 1 mit vier Ausgängen 11, 12, 13, 14 für vier Einspritzventile 21, 22, 23, 24 dargestellt. Die Verteilervorrichtung 1 kann aber auch eine geringere oder höhere Anzahl an Ausgängen 11, 12, 13, 14 für eine entsprechend geringere oder höhere Anzahl an Einspritzventilen 21, 22, 23, 24 aufweisen.

Wie in Fig. 2 dargestellt ist an dem Verteilerkörper 2 weiterhin ein Eingang 41, der als Anschluss 31 ausgebildet ist, ausgebildet. Der Anschluss 31 dient der Versorgung des Verteilerkörpers 2 mit Wasser, das über den Anschluss 31 in den Innenraum 6 des Verteilerkörpers 2 fließen kann. Dazu ist an dem Anschluss 31 eine in den Figuren nicht dargestellte Versorgungsleitung anschließbar. Der Anschluss 31 kann beispielsweise als Schlauchanschluss ausgebildet sein, auf den die Versorgungsleitung, die beispielsweise als Schlauch ausgebildet ist, aufsteckbar und befestigbar ist. Der Anschluss 31 ist in diesem Ausführungsbeispiel an dem ersten Ende 4 des Verteilerkörpers 2 ausgebildet. Der Anschluss 31 kann aber an jeder beliebigen Stelle an dem Verteilerkörper 2 ausgebildet sein. Es können auch mehrere Anschlüsse 31 vorgesehen sein. Der Anschluss 31 ist beispielsweise einstückig mit dem Verteilerkörper 2 ausgebildet.

Wie in dem ersten Ausführungsbeispiel in Figur 2 dargestellt, ist in dem Verteilerkörper 2 eine Öffnung 7 ausgebildet. Die Öffnung 7 verbindet den Innenraum 6 des Verteilerkörpers 2 mit dem Außenbereich 10 des Verteilerkörpers 2. In diesem Ausführungsbeispiel ist die Öffnung 7 in der Seitenwand 8 des Verteilerkörpers 2 ausgebildet und in einer Richtung senkrecht zur Längsachse 3 gerichtet.

An dem Verteilerkörper 2 ist ein Haltebereich 17 zur Befestigung des elastischen Dämpfelements 70 ausgebildet. Der Haltebereich 17 umgibt die Öffnung 7 vollständig umlaufend. Der Haltebereich 17 ist, wie in Figur 2 dargestellt, beispielsweise als ein die Öffnung 7 vollständig umlaufender Wall ausgebildet der Haltebereich 17 ist an einer von dem Innenraum 6 Verteilerkörpers 2 abgewandten Außenseite 9 des Verteilerkörpers 2 ausgebildet. Der Haltebereich 17 ist einstückig mit dem Verteilerkörper 2 ausgebildet. Der Haltebereich 17 ragt in Richtung des Außenbereiches 10 von der Außenseite 9 des Verteilerkörpers 2 ab. Der Haltebereich 17 kann die Form eines hohlen Zylinders haben, wobei die Öffnung 7 in dem Hohlraum des Zylinders angeordnet ist. In diesem Ausführungsbeispiel weist der Haltebereich 17 einen Außenmantel 18 auf. Der Außenmantel 18 ist beispielsweise zylinderförmig ausgebildet.

Wie in Figur 2 dargestellt ist, die Öffnung 7 von einem elastischen Dämpfelement 70 verschlossen. Das elastische Dämpfelement 70 dämpft die Druckpulsationen des Wassers im Innenraum 6 des Verteilerkörpers 2. Wasser aus dem Innenraum 6 des Verteilerkörpers 2 kommt durch die Öffnung 7 mit dem elastischen Dämpfelement 70 in Kontakt. Durch elastische Deformation des elastischen Dämpfelements 70 können die Druckpulsationen des Wassers von dem elastischen Dämpfelement 70 aufgenommen und somit gedämpft werden. In diesem Ausführungsbeispiel umfasst die Verteilervorrichtung 1 ein elastisches Dämpfelement 70. Die Verteilervorrichtung 1 kann aber eine beliebige Anzahl an elastischen Dämpfelementen 70 umfassen, die beispielsweise verschiedene Öffnungen 7 verschließen und die zusammen die Druckpulsationen des Wassers im Innenraum 6 des Verteilerkörpers 2 dämpfen.

In diesem Ausführungsbeispiel ist das Dämpfelements 70 aus einem Elastomer gefertigt. Über die Auswahl des Materials kann die Dämpfungsstärke des elastischen Dämpfelements 70 eingestellt werden. Das elastische Dämpfelement 70 kann beispielsweise aus Gummi gefertigt sein.

Das elastische Dämpfelement 70 ist an einer Öffnung 7 des Verteilerkörpers 2 angeordnet. Die Öffnung 7 ist in diesem Ausführungsbeispiel in einer Seitenwand 8 des Verteilerkörpers 2 ausgebildet. So kann das Wasser durch die Öffnungen 7 aus dem Innenraum 6 des Verteilerkörpers 2 zu dem elastischen Dämpfelement 70 gelangen. Bei mehreren elastischen Dämpfelementen 70 kann jeweils eine Öffnung 7 in dem Verteilerkörper 2 für jeweils ein elastisches Dämpfelement 70 vorgesehen sein. Die Öffnung 7 wird durch das elastische Dämpfelement 70 verschlossen. Die Öffnung 7 ist dabei durch das elastische Dämpfelement 70 luftundurchlässig und feuchtigkeitsundurchlässig verschlossen.

Das elastische Dämpfelement 70 ist komplementär zur Form des Haltebereichs 17 ausgebildet, so dass es an dem Haltebereich 17 befestigt werden kann. In diesem Ausführungsbeispiel ist das Dämpfelement 70 über das Haltelement 17 gestülpt.

Das elastische Dämpfelement 70 umfasst eine Membranbereich 72. Der Membranbereich 72 ist ein sich membranartig flächig erstreckender Bereich des Dämpfelements 70. Der Membranbereich 72 kann sich in Richtung des Außenbereiches 10 des Verteilerkörpers 2 und in Richtung des Innenraums 6 des Verteilerkörpers 2 durch elastische Deformation bewegen und dadurch die Druckpulsationen des Wassers im Innenraum 6 des Verteilerkörpers 2 aufnehmen. Der Membranbereich 72 kann sich unter elastischer Verformung senkrecht zur flächigen Erstreckung des Membranbereichs 72 bewegen und somit Druck des Wassers aufnehmen.

Am Rand des Membranbereichs 72 ist in diesem Ausführungsbeispiel ein Randbereich 71 des elastischen Dämpfelements 70 ausgebildet. Der Randbereich 71 ist komplementär zu dem Haltebereich 17 des Verteilerkörpers 2 ausgebildet. Insbesondere ist der Randbereich 71 komplementär zu dem Außenmantel 18 des Haltebereich 17 ausgebildet.

In diesem Ausführungsbeispiel ist der Außenmantel 18 zylinderförmig ausgebildet. Gleichzeitig ist der Randbereich 71 des elastischen Dämpfelements 70 zylinderförmig ausgebildet und weist eine zylinderförmige Ausnehmung auf, in der das Haltelement angeordnet ist. Der Haltebereich 17 ist von dem Randbereich 71 die Öffnung 7 vollständig umlaufend umgeben. Der Randbereich 71 liegt die Öffnung 7 vollständig umlaufend dicht an dem Haltebereich 17, insbesondere an dem Außenmantel 18 des Haltebereichs 17, an.

Das elastische Dämpfelement 70 ist in diesem Ausführungsbeispiel kappenförmig ausgebildet, wobei der Membranbereich 72 und der Randbereich 71 zusammen die Kappe bilden. Wie in den Figuren dargestellt, umschließt das Dämpfelement 70 den Haltebereich 17 kappenartig und verschließt dergestalt die Öffnung 7. Der Randbereich 71 liegt dabei an dem Außenmantel 18 des Haltebereichs 17 an und verschließt die Öffnung 7 dadurch luftundurchlässig und flüssigkeitsundurchlässig.

Das elastische Dämpfelement 70 ist in diesem Ausführungsbeispiel als einstückiges Elastomerbauteil mit dem Randbereich 71 und dem Membranbereich 72 ausgebildet.

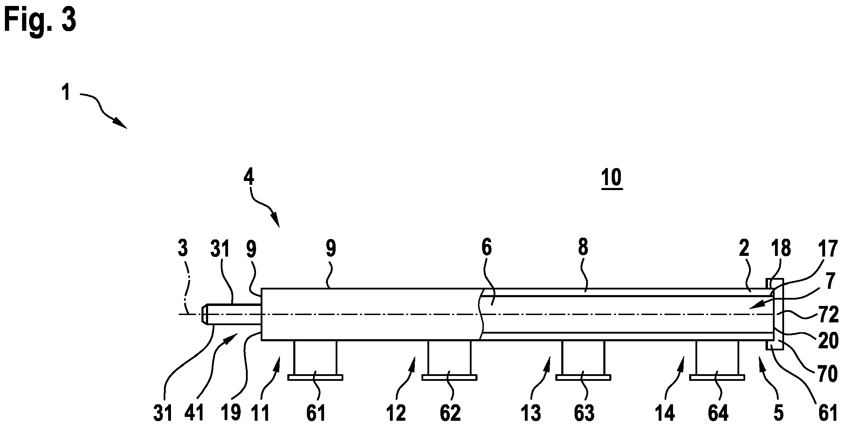

In dem in Figur 3 dargestellten zweiten Ausführungsbeispiel der Verteilervorrichtung 1 ist die Öffnung 7 an dem zweiten Ende 5 des Verteilerkörpers 2 ausgebildet. Dabei bildet das zweite Ende 5 des Verteilerkörpers 2 den Haltebereich 17 für das elastische Dämpfelement 70. Der rohrförmige Verteilerkörper 2 ist am zweiten Ende 5 des Verteilerkörpers 2 nicht geschlossen sondern weist eine Öffnung 7 auf. Der Haltebereich 17 umgibt die Öffnung 7 vollständig umlaufend. Der Haltebereich 17 ist einstückig mit dem Verteilerkörper 2 ausgebildet. In diesem Ausführungsbeispiel weist der Haltebereich 17 einen Außenmantel 18 auf. Der Außenmantel 18 ist beispielsweise zylinderförmig ausgebildet. Die Öffnung 7 ist von dem elastischen Dämpfelement 70 verschlossen. Das in diesem Ausführungsbeispiel kappenartig ausgeführte elastische Dämpfelement 70 ist dazu über das zweite Ende 5 des Verteilerkörpers 2 gestülpt.

Selbstverständlich sind auch weitere Ausführungsbeispiele und Mischformen der dargestellten Ausführungsbeispiele möglich.

## Patentansprüche

1. Verteilervorrichtung (1) für eine Wassereinspritzvorrichtung (100) einer Brennkraftmaschine, mit einem sich entlang einer Längsachse (3) erstreckenden Verteilerkörper (2) mit einem ersten Ende (4) und einem zweiten Ende (5), wobei in dem Verteilerkörper (2) ein Innenraum (6) ausgebildet ist,
wobei an dem Verteilerkörper (2) mehrere Ausgänge (11,12,13,14) ausgebildet sind, die zur Befestigung von Einspritzventilen (21,22,23,24) vorgesehen sind,
wobei an dem Verteilerkörper (2) wenigstens ein als Anschluss (31) ausgebildeter Eingang (41) ausgebildet ist, an den wenigstens eine Versorgungsleitung anschließbar ist, **dadurch gekennzeichnet, dass** in dem Verteilerkörper (2) wenigstens eine Öffnung (7) ausgebildet ist, die den Innenraum (6) des Verteilerkörpers (2) mit einem Außenbereich (10) des Verteilerkörpers (2) verbindet, wobei die Öffnung (7) durch wenigstens ein elastisches Dämpfelement (70) verschlossen ist.

2. Verteilervorrichtung nach einem der vorhergehenden Ansprüche, **dadurch gekennzeichnet, dass** das elastische Dämpfelement (70) wenigstens teilweise aus einem Elastomer besteht.

3. Verteilervorrichtung nach einem der vorhergehenden Ansprüche, **dadurch gekennzeichnet, dass** elastische Dämpfelement (70) wenigstens einen elastischen Membranbereich (72) umfasst, der sich in Richtung des Außenbereiches (10) des Verteilerkörpers (2) und in Richtung des Innenraums (6) des Verteilerkörpers (2) bewegen kann.

4. Verteilervorrichtung nach einem der vorhergehenden Ansprüche, **dadurch gekennzeichnet, dass** an dem Verteilerkörper (2) ein die Öffnung (7) umlaufender Haltebereich (17) zur Befestigung des elastischen Dämpfelements (70) ausgebildet ist

5. Verteilervorrichtung nach Anspruch 4, **dadurch gekennzeichnet, dass** der Haltebereich (17) an einer von dem Innenraum (6) des Verteilerkörpers (2) abgewandten Außenseite (9) des Verteilerkörpers (2) ausgebildet ist und von der Außenseite (9) des Verteilerkörpers (2) abragt.

6. Verteilervorrichtung nach Anspruch 4, **dadurch gekennzeichnet, dass** die Öffnung (7) an einer Stirnseite (19,20) des Verteilerkörpers (2) an einem Ende (4,5) des Verteilerkörpers (2) ausgebildet ist, wobei ein Ende (4,5) des Verteilerkörpers (2) den Haltebereich (17) bildet.

7. Verteilervorrichtung nach einem der Ansprüche 4 bis 6, **dadurch gekennzeichnet, dass** an dem elastischen Dämpfelement (70) ein Randbereich (71) ausgebildet ist, der einen Außenmantel (18) des Haltebereichs (17) vollständig umlaufend umgibt, insbesondere an dem Außenmantel (18) des Haltebereichs (17) vollständig umlaufend anliegt.

8. Verteilervorrichtung nach einem der Ansprüche 4 bis 7, **dadurch gekennzeichnet, dass** der Haltebereich (17) einstückig mit Verteilerkörper (2) ausgebildet ist.

9. Verteilervorrichtung nach einem der Ansprüche 4 bis 8, **dadurch gekennzeichnet, dass** das elastische Dämpfelement (70) kappenförmig ausgebildet ist, wobei das Dämpfelement (70) den Haltebereich (17) kappenartig umschließt und dergestalt die Öffnung (7) verschließt.

10. Verteilervorrichtung nach einem der vorhergehenden Ansprüche, **dadurch gekennzeichnet, dass** das elastische Dämpfelement (70) einstückig ausgebildet ist.
